# EUROPEAN PATENT APPLICATION

(11) **EP 4 425 632 A1**
(43) Date of publication of application: **04.09.2024**
(21) Application number: 23827449.2
(22) Date of filing: 15.06.2023
(51) Int. Cl.: H01M 10/0562, H01M 10/0525, C01B 25/14

(54) **METHOD FOR RESTORING ION CONDUCTIVITY OF SULFIDE-BASED SOLID ELECTROLYTE, SULFIDE-BASED SOLID ELECTROLYTE WITH ION CONDUCTIVITY RECOVERED THROUGH METHOD, AND LITHIUM-ION SECONDARY BATTERY COMPRISING SOLID ELECTROLYTE**

(30) Priority: 24.06.2022 KR 20220077323; 13.06.2023 KR 20230075819
(71) Applicant: LG Energy Solution, Ltd., Seoul 07335 (KR)
(72) Inventor: KIM, Yeeun, Daejeon 34122 (KR); KIM, Youngbok, Daejeon 34122 (KR)
(74) Representative: Goddar, Heinz J.
(86) International application number: PCT/KR2023/008302
(87) International publication number: WO 2023/249330

(57) **Abstract**

Provided are a method for restoring ionic conductivity of a sulfide-based solid-state electrolyte, including: a) contacting a sulfide-based solid-state electrolyte having a reduced ionic conductivity with a solvent having a dielectric constant of less than 7; and b) drying the solid-state electrolyte contacted with the solvent, a sulfide-based solid-state electrolyte whose ionic conductivity is restored by the method, and a lithium ion secondary battery including the sulfide-based solid-state electrolyte.

## Description

### TECHNICAL FIELD

### CROSS-REFERENCE TO RELATED APPLICATIONS

The present application claims priority to Korean Patent Application No. 10-2022-0077323, filed on June 24, 2022, and Korean Patent Application No. 10-2023-0075819, filed June 13, 2023, the disclosures of which are incorporated herein by reference in their entirety.

The present disclosure relates to a method for restoring ionic conductivity of a sulfide-based solid-state electrolyte, a sulfide-based solid-state electrolyte having ionic conductivity restored by the method, and a lithium ion secondary battery comprising the solid-state electrolyte.

### BACKGROUND ART

Lithium-ion secondary batteries are used for various purposes such as electric automobiles and mobile information terminals because of their high energy density.

However, safety issues such as leakage of the electrolyte and the risk of fire have been constantly raised because the conventional Lithium-ion secondary battery mostly uses liquid electrolytes such as organic solvents. Therefore, interest in all-solid-state batteries using inorganic solid-state electrolytes has been increasing recently.

All-solid-state batteries have the advantage of being able to produce battery cells in a safe and simple form because they are based on technology that eliminates organic solvents (liquid electrolytes). In order to improve the performance of these all-solid-state batteries, solid-state electrolytes with high ionic conductivity (ion conductivity) and safety are required, and related research is actively being conducted accordingly.

Sulfide-based solid-state electrolytes are gaining attention as solid-state electrolytes that contribute to the improvement of battery characteristics because they have a lithium ion (Li-ion transport number) yield of about 1 and an ionic conductivity of about 10⁻³ S/cm. Sulfide-based solid-state electrolytes are manufactured by melt quenching method and solid phase reaction method.

However, sulfide-based solid-state electrolytes react readily with moisture, and even small amounts of moisture can change their form and properties. For example, sulfide-based solid-state electrolytes react with moisture in the air to generate hydrogen sulfide (H₂S) gas, and their ionic conductivity value is greatly reduced. Specifically, when a sulfide-based solid-state electrolyte is exposed to a dry room environment for about 5 hours, its ionic conductivity is reduced by 20 to 60%.

The ionic conductivity of a solid-state electrolyte has a significant impact on the performance of a secondary battery in which it is applied. Therefore, the ionic conductivity of a solid-state electrolyte is used as a metric to evaluate the performance of a secondary battery.

Accordingly, in order to improve the performance of secondary batteries, it is necessary to develop technologies for manufacturing solid-state electrolytes with high ionic conductivity, as well as technologies for stabilizing or restoring the ionic conductivity of solid-state electrolytes.

### Patent Documents

Japan Patent Laid-Open Publication No. 2015-18726

### DISCLOSURE

### Technical Problem

The present inventors have studied a method for recovering the ionic conductivity of sulfide-based solid-state electrolytes whose ionic conductivity has decreased due to external environmental factors. The present disclosure was completed by the discovery that treating sulfide-based solid-state electrolytes with specific solvents would restore the ionic conductivity.

Accordingly, it is an object of the present disclosure to provide a method for restoring ionic conductivity of a sulfide-based solid-state electrolyte, a sulfide-based solid-state electrolyte having ionic conductivity restored by the method, and a lithium ion secondary battery comprising the solid-state electrolyte.

### Technical Solution

To accomplish the above objectives, the present disclosure provides a method for restoring ionic conductivity of a sulfide-based solid-state electrolyte, comprising:
a) a step of contacting the sulfide-based solid-state electrolyte in which the ionic conductivity is reduced with a solvent having a dielectric constant of less than 7; and
b) a step of drying the solid-state electrolyte contacted with the solvent.

The present disclosure also provides a sulfide-based solid-state electrolyte whose ionic conductivity is restored by the aforementioned method according to the present disclosure.

The present disclosure also provides a lithium ion secondary battery, comprising:
a positive electrode; a negative electrode; and a solid-state electrolyte interposed between the positive electrode and the negative electrode,
wherein the solid-state electrolyte comprises the aforementioned solid-state electrolyte according to the present disclosure.

### Advantageous Effects

The method for restoring ionic conductivity of a sulfide-based solid-state electrolyte according to the present disclosure provides an efficient method for restoring ionic conductivity of a solid-state electrolyte by a simple treatment.

Furthermore, the above method for restoring ionic conductivity and the sulfide-based solid-state electrolyte whose ionic conductivity is restored by the above method make it possible to use a solid-state electrolyte having a high ionic conductivity in the assembly of a battery.

Furthermore, the lithium ion secondary battery of the present disclosure provides an effect of improving the performance of the battery by including the solid-state electrolyte as described above.

### Description of Drawings

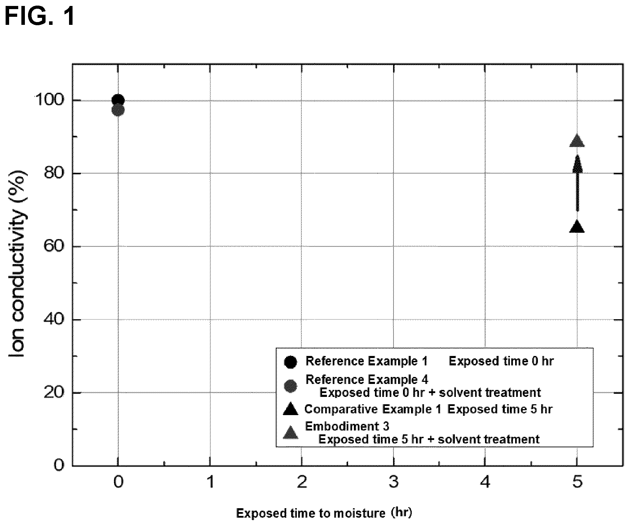

FIG. 1 is a graph showing measured ionic conductivity of solid-state electrolytes manufactured in reference examples, a comparative example, and embodiments of the present disclosure.

### Best Mode

The disclosure provided herein will be described in more detail below.

The method of restoring the ionic conductivity of a sulfide-based solid-state electrolyte of the present disclosure comprises:
a) a step of contacting the sulfide-based solid-state electrolyte in which the ionic conductivity is reduced with a solvent having a dielectric constant of less than 7; and
b) a step of drying the solid-state electrolyte contacted with the solvent.

In one embodiment of the present disclosure, the decrease in ionic conductivity in step a) above may be due to exposure of the sulfide-based solid-state electrolyte to moisture, wherein the moisture exposure may be due to contact with moisture, exposure to an atmosphere containing moisture, or the like.

In one embodiment of the present disclosure, the reduction in ionic conductivity in step a) above may be a 1 to 80%, 6 to 80%, 1 to 70%, or 6 to 70% reduction in ionic conductivity based on 100% of the ionic conductivity of the sulfide-based solid-state electrolyte prior to atmospheric exposure. Further, the reduction may be 6 to 60%, 10 to 60%, 20 to 60%, or 30 to 50%.

In one embodiment of the present disclosure, the ionic conductivity restoration in step a) above may comprise increasing the ionic conductivity of the sulfide-based solid-state electrolyte having a reduced ionic conductivity by a range having a lower limit selected from a group of 1%, 2%, 4%, 6%, 8%, 10%, 12%, 14%, 16%, 18%, 20%, 25%, 30%, 35%, and 40%, and an upper limited selected from a group of 300%, 250%, 200%, 150%, 100%, 80%, 60%, and 40%. For example, the increase may be 1 to 300% or 10 to 300%. In addition, the ionic conductivity of the sulfide-based solid-state electrolyte with the reduced ionic conductivity may be increased by 50 to 100%, 50 to 98%, 50 to 95%, 70 to 95%, 80 to 95%, 80 to 94%, or 85 to 94% based on 100% of the ionic conductivity of the sulfide-based solid-state electrolyte before the reduction of the ionic conductivity.

Solvents having a dielectric constant of less than 7 include xylene, isobutyl butyrate, anisole, toluene, hexane, heptane, isobutyl isobutyrate (IBIB), decane, dibutyl ether, butyl bytyrate, and the like, which may be used singly or in combination of two or more thereof. As used herein, the xylene may be an ortho, meta, or para xylene.

In particular, one or more solvents comprising xylene, isobutylbutyrate and anisole may be more preferably used.

More preferably, the solvent may have a dielectric constant of 1 to 5.

Since the solvent should not be reactive with the solid-state electrolyte, a non-polar or weakly polar solvent may be used. In particular, those with a dipole moment of 5D or less may be used.

In the present disclosure, the method for restoring the ionic conductivity of a sulfide-based solid-state electrolyte may be applied to a solid-state electrolyte in a particulate (powder) state.

Sulfide-based solid-state electrolytes have been attracting attention as solid-state electrolytes that contribute to the improvement of battery properties because they have a lithium ion transport number of about 1 and an ionic conductivity of about 10⁻³ S/cm.

However, sulfide-based solid-state electrolytes react readily with moisture, and even when they react with a small amount of moisture, their morphology and properties change, and their ionic conductivity value is greatly reduced. Specifically, when a sulfide-based solid-state electrolyte is exposed to a dry room environment (100 to 160 ppm H₂O) for 5 hours, its ionic conductivity is reduced by 20 to 60%.

In the manufacturing of all-solid-state or semi-solid-state batteries, sulfide-based solid-state electrolytes are sometimes used for battery assembly immediately after manufacturing, but it is more common for them to be used for battery assembly after storage. Therefore, if a sulfide-based solid-state electrolyte with a reduced ionic conductivity during storage is used to manufacture an all-solid-state or semi-solid-state battery, it will cause the performance of the battery to decrease.

The present provides a solution that can efficiently address the above problems.

In one embodiment of the present disclosure, contacting the sulfide-based solid-state electrolyte with the solvent can be implemented in a variety of ways known in the art. For example, the solid-state electrolyte may be mixed with the solvent, the solvent may be sprayed onto the solid-state electrolyte, the solid-state electrolyte may be immersed in the solvent, or the like.

The contacting of the sulfide-based solid-state electrolyte with the solvent may preferably be conducted such that the surface of the sulfide-based solid-state electrolyte is entirely wetted with the solvent.

The mixing may typically be carried out for at least 1 minute, preferably for 1 minute to 1 hour, more preferably for 1 minute to 10 minutes. However, as the amount of solid-state electrolyte to be treated increases, the treatment time will increase proportionally, and is therefore not limited to the above times.

In one embodiment of the present disclosure, the mixing is preferably carried out by stirring of the mixture, and the stirring may be carried out, for example, in the range from 100 rpm to 3000 rpm, preferably from 1000 rpm to 2000 rpm.

In one embodiment of the present disclosure, the drying is preferably carried out under a vacuum atmosphere.

The drying method is not particularly limited, but may preferably be carried out, for example, under warm conditions. In this case, the drying temperature may be, for example, 25 to 100°C, more preferably 45 to 70°C.

In one embodiment of the present disclosure, the cause of the reduction of the ionic conductivity of the sulfide-based solid-state electrolyte is not particularly limited, but may be, for example, due to exposure of the sulfide-based solid-state electrolyte to moisture, wherein the moisture exposure may be due to contact with moisture, exposure to an atmosphere containing moisture, and the like.

The present disclosure is preferably applicable to a sulfide-based solid-state electrolyte which, after being manufactured, has a reduced ionic conductivity due to contact with an atmosphere containing moisture.

In one embodiment of the present disclosure, the sulfide-based solid-state electrolyte may be, although not limited thereto, one or a mixture of two or more selected from a group consisting of Li₁₀GeP₂S₁₂, Li₂S-P₂S₅ glasses, thio-LISICONS, Li_{9.54}Si_{1.74}P_{1.44}S_{11.7}Cl_{0.3}, Li₆PS₅X (LPSX; X = Cl, Br, I) argyrodites, Li₁₂₋ₘ₋ₓ⁺(M^{m+}Y₄²⁻)Y₂₋ₓ²⁻Xₓ⁻ (wherein M = Si, Ge, Sn, P, As; Y = O, S, Se, Te; X = Cl, Br, I; 0 ≤ x ≤ 2), and the like. However, it is not limited thereto, and any sulfide-based solid-state electrolyte may be used without particular limitation.

Furthermore, the present disclosure relates to a sulfide-based solid-state electrolyte whose ionic conductivity is restored by the method of the present disclosure.

The above sulfide-based solid-state electrolyte may be manufactured by:
a) contacting a sulfide-based solid-state electrolyte having a reduced ionic conductivity with one or more solvents selected from a group consisting of xylene, isobutylbutyrate, and anisole; and
b) drying the solid-state electrolyte contacted with the solvent.

For the above manufacturing method, the description of the manufacturing method described above can be applied as it is, and the redundant description will be omitted.

The present disclosure also includes a lithium ion secondary battery comprising: a positive electrode; a negative electrode; and a solid-state electrolyte interposed between the positive electrode and the negative electrode, wherein the solid-state electrolyte comprises the sulfide-based solid-state electrolyte of the present disclosure.

The lithium ion secondary battery may be an all-solid-state or a semi-solid-state battery.

Hereinafter, the technical gist related to the present disclosure will be described with specific examples.

### Sulfide-based solid-state electrolyte

A sulfide-based solid-state electrolyte according to the present disclosure includes sulfide-based solid-state electrolyte particles treated with the solvent as described above, and the particles may have been manufactured as a membrane-like sulfide-based solid-state electrolyte by a dry or wet process.

The sulfide-based solid-state electrolyte may comprise a dry mixture of the sulfide-based solid-state electrolyte particles with binder particles.

The sulfide-based solid-state electrolyte may be manufactured by coating and drying a slurry comprising the sulfide-based solid-state electrolyte particles together with binders and solvents onto a substrate.

The dry process is a method of manufacturing a solid-state electrolyte sheet by pressurizing a solid-state electrolyte powder, which may be carried out, for example, by a process of stacking a solid-state electrolyte powder, a positive electrode active material powder, and a negative electrode active material powder, respectively, and pressurizing them to make a cell.

The solid-state electrolyte powder may further include a binder powder. Examples of binder powders used in the dry process include, but are not limited to, PTFE and the like.

In the above, the binder powder may be present from 1 to 5 parts by weight, based on 100 parts by weight of the solid-state electrolyte powder.

The wet process is a method of manufacturing a solid-state electrolyte sheet by coating a substrate with a slurry comprising a solvent, a binder, and a solid-state electrolyte powder.

According to a preferred embodiment of the present disclosure, the solid-state electrolyte slurry may comprise 40 to 70 wt% of the solid-state electrolyte, 1 to 5 wt% of the binder and 20 to 59 wt% of the solvent.

Such binders include, but are not limited to, acrylonitrile butadiene rubber (NBR), acrylic-based polymers, silicone-based polymers, and the like.

Although not limited thereto, solvents such as, xylene, hexane, benzene, anisole, isobutyl isobutyrate, and toluene may be used.

The sulfide-based solid-state electrolyte particles are not particularly limited and may be any known sulfide-based solid-state electrolyte particles used in the technical field. The sulfide-based solid-state electrolyte particles may be commercially available, or may be manufactured by crystallization of amorphous sulfide-based solid-state electrolyte particles.

For example, the sulfide-based solid-state electrolyte particles may be one or a mixture of two or more selected from a group consisting of Li₁₀GeP₂S₁₂, Li₂S-P₂S₅ glasses, thio-LISICONS, Li_{9.54}Si_{1.74}P_{1.44}S_{11.7}Cl_{0.3}, Li₆PS₅X(LPSX; X = Cl, Br, I) argyrodites, Li₁₂₋ₘ₋ₓ⁺(M^{m+}Y₄²⁻)Y₂₋ₓ²⁻Xₓ⁻ (wherein M = Si, Ge, Sn, P, As; Y = O, S, Se, Te; X = Cl, Br, I; 0 ≤ x ≤ 2), and the like. However, they are not limited thereto, and any sulfide-based solid-state electrolyte particles may be used without any particular limitation.

The average particle size of the sulfide-based solid-state electrolyte particles may be in the range used for known all-solid-state or semi-solid-state batteries, for example, from 0.1 µm to 10 µm, preferably from 1 µm to 3 µm. If the average particle size is less than the above range, there is a risk of coagulation between particles, and if it exceeds the above range, there is a risk of deterioration of the battery properties, such as a high porosity of the manufactured solid-state electrolyte resulting in a decrease in capacity, and difficulty in thinning, which may be disadvantageous in terms of the energy density of the final cell. Preferably, the sulfide-based solid-state electrolyte particles have an ionic conductivity of at least 1 × 10⁻³ S/cm, and more preferably at least 5 × 10⁻³ S/cm.

The sulfide-based solid-state electrolyte may further comprise other solid-state electrolyte particles known in the art in addition to the solid-state electrolyte particles described above. For example, it may further comprise an inorganic solid-state electrolyte or an organic solid-state electrolyte.

The inorganic solid-state electrolytes which may be used include, for example, Li₂O-B₂O₃, U₂O-B₂O₃-P₂O₅, Li₂O-V₂O₅-SiO₂, Li₃PO₄, Li₂O-Li₂WO₄-B₂O₃, LiPON, LiBON, Li₂O-SiO₂, Lil, Li₃N, Li₅La₃Ta₂O₁₂, Li₇La₃Zr₂O₁₂, Li₆BaLa₂Ta₂O₁₂, Li₃PO_{(4-3/2w)}N_{w} (w is w<1), Li_{3.6}Si_{0.6}P_{0.4}O₄, and the like.

As the organic solid-state electrolyte, a mixture of a lithium salt with a material of the polymer family, such as, for example, a polyethylene derivative, a polyethylene oxide derivative, a polypropylene oxide derivative, a phosphate ester polymer, a poly agitation lysine, a polyester sulfide, a polyvinyl alcohol, a polyvinylidene fluoride, and the like, may be used.

### Manufacturing of all-solid-state batteries

An all-solid-state battery according to the present disclosure may be manufactured with a structure comprising a positive electrode and a negative electrode, and a sulfide-based solid-state electrolyte as described above disposed therebetween.

The all-solid-state battery has been manufactured, for example, by a dry compression process in which the electrodes and the solid-state electrolyte are manufactured in powder states and then placed in a predetermined mold and pressed, or by a slurry coating process in which a slurry comprising a solid-state electrolyte, a solvent, and a binder is manufactured and coated on an electrode or release paper, and then dried. The method of manufacturing an all-solid-state battery having the above composition is not particularly limited in the present disclosure, and may be implemented by any method known in the art.

For example, the all-solid-state battery may be manufactured by disposing a solid-state electrolyte between a positive electrode and a negative electrode, compressing molding thereof to assemble a cell, installing the assembled cell in a shell, and sealing the shell by heating compression or the like. Laminated cases made of aluminum, stainless steel, etc., cylindrical or angular metal containers, or pouch-type containers such as aluminum pouches may be used as the outer material.

Any known art in the field may be applied without any limitation to the structure, respective components, and manufacturing methods of the above all-solid-state battery.

### <Positive electrode>

The positive electrode of the all-solid-state battery according to the present disclosure is not particularly limited, and any positive electrode known in the art may be used without any limitation. In particular, a positive electrode collector laminated with a positive electrode active material may be used.

As the positive electrode collector, anything that has high conductivity without causing chemical changes in the battery may be used. For example, stainless steel, aluminum, titanium, calcined carbon, or aluminum or stainless steel with its surface treated by carbon, nickel, titanium, silver, or the like may be used.

The positive electrode active material may vary depending on the application of the lithium secondary battery, and may include lithium metal oxides such as LiNi_{0.8-x}Co_{0.2}AlₓO₂, LiCoₓMn_{y}O₂, LiNiₓCo_{y}O₂, LiNiₓMn_{y}O₂, LiNiₓCo_{y}Mn_{z}O₂, LiCoO₂, LiNiO₂, LiMnO₂, LiFePO₄, LiCoPO₄, LiMnPO₄, and Li₄Ti₅O₁₂ (0< x,y, or z < 1); chalcogenides such as Cu₂Mo₆S₈, FeS, CoS, and NiS; or oxides, sulfides, or halides of scandium, ruthenium, titanium, vanadium, molybdenum, chromium, manganese, iron, cobalt, nickel, copper, zinc, and the like; may be used, but are not limited thereto. Examples of such oxides or sulfides include, but are not limited to, TiS₂, ZrS₂, RuO₂, Co₃O₄, Mo₆S₈, V₂O₅, and the like.

The shape of the positive electrode active material is not particularly limited and may have a shape of, *e.g*., spherical, elliptical, cubic, or the like. The average particle diameter of the positive electrode active material may be in the range of 1 to 50 µm, but is not limited thereto.

The positive electrode may further comprise a binder, the binder being one or more selected from a group consisting of a fluorine-containing binder such as polyvinylidene fluoride (PVDF), polytetrafluoroethylene (PTFE), and the like.; Polyacrylonitrile (PAN), nitrile butadiene rubber (NBR), styrene-butadiene-styrene copolymer (SBS), polybutadiene, styrene-ethylenebutylene-styrene copolymer (SEBS), silicone rubber (SR), hydrogenated nitrile butadiene rubber (HNBR), poly(ethylene vinyl acetate) (PEVA), poly(methyl methacrylate) (PMMA), polyisobutene (PIB), and the like. However, they are not limited thereto.

The content of the binder is not particularly limited to the extent that it is capable of immobilizing the positive electrode active material, and may, for example, range from 0 to 10 wt% with respect to the positive electrode as a whole.

The positive electrode may further comprise a conductive material, the conductive material may be nickel powder, cobalt oxide, titanium oxide, carbon or the like. As the carbon, one or more species selected from the group consisting of ketjen black, acetylene black, furnace black, graphite, carbon fiber, and fullerene may be used.

The content of the conductive material may be selected taking into account other conditions of the battery, such as the type of conductive material, and may, for example, be in the range of 1 to 10 wt% with respect to the positive electrode as a whole.

The positive electrode may further comprise a sulfide-based solid-state electrolyte in an amount of about 20 wt%.

### <Negative electrode>

The negative electrode of the all-solid-state battery according to the present disclosure are not particularly limited, and any negative electrode known in the art may be used without limitation. Specifically, the negative electrode may be a collector which is laminated with lithium metal alone, or laminated with a negative electrode active material, or may be a collector alone (anodeless), or may have a protective layer applied thereto.

The negative electrode and collector are not particularly limited so long as they are conductive without causing chemical changes in the all-solid-state battery. For example, stainless steel, aluminum, titanium, calcined carbon, copper or stainless steel with its surface treated with carbon, nickel, titanium or silver, and aluminum-cadmium alloys, and the like may be used. Furthermore, the negative electrode collector, like the positive electrode collector, may be in various forms, such as a film, sheet, foil, net, porous material, foam, nonwoven material, etc. having microscopic irregularities formed on its surface.

As the negative electrode active material, one or more species selected from a group consisting of lithium metal, lithium alloy, lithium metal composite oxide, lithium-containing titanium composite oxide (LTO), and combinations thereof may be used.

The lithium alloy may be an alloy comprising lithium and at least one metal selected from Na, K, Rb, Cs, Fr, Be, Mg, Ca, Sr, Ba, Ra, Al, and Sn.

The lithium metal complex oxide is a metal oxide (MeOₓ) of lithium and any one metal selected from the group consisting of Si, Sn, Zn, Mg, Cd, Ce, Ni, and Fe, and may be, for example, LiₓFe₂O₃ (0<x≤1) or LiₓWO₂ (0<x≤1).

Also, as the negative electrode active material, metal composite oxides such as SnₓMe₁₋ₓMe'_{y}O_{z} (Me: Mn, Fe, Pb, Ge; Me': Al, B, P, Si, elements of group 1, 2, 3 of the periodic table, halogen; 0<x≤1; 1≤y≤3; 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅ may be used; and carbon-based negative electrode active materials such as crystalline carbon, amorphous carbon or carbon composites may be used alone or in combination of two or more of them.

The negative electrode may be manufactured by methods known in the art.

### EMBODIMENTS OF THE DISCLOSURE

Hereinafter, the present disclosure will be described in detail with reference to an embodiment. However, the embodiments according to the present disclosure may be modified in various other forms, and the scope of the present disclosure should not be construed to be limited to the embodiments described below. Exemplary embodiments of the present disclosure are provided to more fully illustrate the present disclosure to one of ordinary skill in the art.

### <Sulfide-based solid-state electrolyte used in embodiments and comparative examples>

In the embodiments and comparative examples of the present disclosure, an argyrodite-based solid-state electrolyte (manufacturer: Mitsui) was purchased and used.

### Reference Example 1: Measurement of ionic conductivity of sulfide-based solid-state electrolyte

The purchased argyrodite-based solid-state electrolyte powder was molded in a pellet shape at 360 Mpa without being exposed to the atmosphere, and sandwiched between stainless steel electrodes to measure the ionic conductivity. The ionic conductivity was 3.06 mS/cm.

### Reference Examples 2-4: Measurements of ionic conductivity of sulfide-based solid-state electrolyte immediately after manufacturing

The purchased argyrodite-based solid-state electrolyte powder was mixed with each solvent in Table 1 below at 2,000 rpm for 6 minutes without being exposed to the atmosphere. Then, it was dried at 100°C for 6 hours under vacuum conditions.

The dried solid-state electrolyte powders were molded in pellet shapes and sandwiched between stainless steel electrodes to measure the ionic conductivity, and the results are shown in Table 1 below.

**[Table 1]**

| | Solvent used | Ionic conductivity (mS/cm) |
|---|---|---|
| Reference Example 1 | - | 3.06 |
| Reference Example 2 | Anisole | 2.98 |
| Reference Example 3 | Xylene | 2.99 |
| Reference Example 4 | Isobutyl isobutyrate (IBIB) | 3.02 |

From the above experiments, it was found that, when the sulfide-based solid-state electrolyte not exposed to moisture is treated with a solvent having a dielectric constant of less than 7, there is little change in the ionic conductivity compared to the case of no solvent treatment in Reference example 1. This difference appears to be due to the reduction in ionic conductivity caused by contact with air and impurities during solvent treatment.

### Comparative Example 1: Measurement of the ionic conductivity of a sulfide-based solid-state electrolyte after storage

The argyrodite-based solid-state electrolyte powder was exposed to air for 5 hours in a dry room (H₂O level of 100∼160ppm) environment, and then the exposed solid-state electrolyte powder was molded into a pellet shape and sandwiched with stainless steel electrodes to measure the ionic conductivity. The ionic conductivity was 1.99 mS/cm.

As a result of the above experiments, it was confirmed that the ionic conductivity was reduced by 35% compared to the electrical conductivity of Reference Example 1.

### Embodiments 1 to 3: Measurement of ionic conductivity of a sulfide-based solid-state electrolyte after storage and solvent mixing treatment

The sulfide-based solid-state electrolyte exposed to air in the same manner as in Comparative Example 1 above was mixed with each of the solvents in Table 2 below and mixed at 2,000 rpm for 6 minutes. Thereafter, it was dried at a temperature of 100°C for 6 hours under vacuum conditions.

Each of the above dried solid-state electrolyte powders was molded into pellets, sandwiched with stainless steel electrodes to measure the ionic conductivity, and the results are shown in Table 2 below.

**[Table 2]**

| | Solvent used | Ionic conductivity (mS/cm) | Ionic Conductivity reduction (%) |
|---|---|---|---|
| Reference Example 1 | - | 3.06 | 0 |
| Comparative Example 1 | - | 1.99 | 35 |
| Embodiment 1 | Anisole | 2.71 | 11 |
| Embodiment 2 | Xylene | 2.86 | 7 |
| Embodiment 3 | Isobutyl isobutyrate (IBIB) | 2.89 | 6 |

From the above experiments, it can be seen that the ionic conductivity of the sulfide-based solid-state electrolyte reduced by dry room exposure (35% reduction) was restored by the above solvent treatment to 94% compared to the ionic conductivity of the solid-state electrolyte whose ionic conductivity was measured without dry room exposure (Reference Example 1).

### Embodiment 4 and Comparative Example 2: Manufacturing of all-solid-state batteries

An all-solid-state battery was manufactured using the sulfide-based solid-state electrolyte used for measuring the ionic conductivity in Reference Example 1 (Reference Example 5).

Also, an all-solid-state battery was manufactured using the sulfide-based solid-state electrolyte used for measuring the ionic conductivity in Comparative Example 1 (Comparative Example 2).

Also, an all-solid-state battery was manufactured using the sulfide-based solid-state electrolyte used for measuring the ionic conductivity in Embodiment 3 (Embodiment 4).

### (1) Manufacturing of all-solid-state electrolyte

The sulfide-based solid-state electrolyte powder used for measuring the ionic conductivity in Reference Example 1, the sulfide-based solid-state electrolyte powder used for measuring the ionic conductivity in Embodiment 3, and the sulfide-based solid-state electrolyte powder used for measuring the ionic conductivity in Comparative Example 1 were each mixed with a rubber binder and a solvent, xylene, at a weight ratio of 55:2:43 to manufacture a slurry composition. Each of the slurry compositions was coated on a release paper using a Tape-cast method and dried for 6 hours at 100°C under vacuum. Then, a solid-state electrolyte film with a thickness of 30 µm was formed by applying pressure of 500 MPa to the slurry composition. Thereafter, the sulfide-based solid-state electrolyte film in a free-standing state was applied to the cell by removing the release paper.

### (2) Manufacturing of all-solid-state batteries

After stacking each of the sulfide-based solid-state electrolyte membranes manufactured above in the order of the positive electrode (NCM811), solid-state electrolyte membrane, and the negative electrode (Li metal), they were pressurized at 200 MPa. Thereafter, a collector was attached to the above-mentioned positive electrode and negative electrode, respectively. Then, the all-solid-state batteries of Reference Example 5, Embodiment 4, and Comparative Example 2 were manufactured by assembling them into an aluminum pouch cell.

### Experimental Example 1: Evaluation of all-solid-statebatteries

The Coulombic efficiencies of the all-solid-state batteries of Reference Example 5, Embodiment 4, and Comparative Example 2 were compared. The lifetime characteristics of the batteries of Reference Example 5, Embodiment 4, and Comparative Example 2 at 0.05C charge and discharge were measured by the 1C charge-discharge method at 60°C when charged and discharged at 0.05C and the results were shown in Table 3.

**[Table 3]**

| All-solid-state Batteries | Lifetime characteristics (number of cycles@retention 90%) |
|---|---|
| Reference Example 5 | 55 |
| Embodiment 4 | 53 |
| Comparative Example 2 | 46 |

According to the evaluation results, it was confirmed that the sulfide-based solid-state electrolyte (Embodiment 3) whose ionic conductivity was restored by the method of the present disclosure did not deteriorate the quality of the battery compared to the solid-state electrolyte (Reference Example 1) whose ionic conductivity was not reduced.

## Claims

1. A method for restoring ionic conductivity of a sulfide-based solid-state electrolyte, comprising:
a) a step of contacting the sulfide-based solid-state electrolyte whose ionic conductivity is reduced with a solvent having a dielectric constant of less than 7; and
b) a step of drying the solid-state electrolyte contacted with the solvent.

2. The method for restoring ionic conductivity according to claim 1,
wherein the ionic conductivity reduction in step a) is caused by exposure of the sulfide-based solid-state electrolyte to moisture.

3. The method for restoring ionic conductivity according to claim 1,
wherein the ionic conductivity reduction in step a) is caused by exposure of the sulfide-based solid-state electrolyte to air including moisture.

4. The method for restoring ionic conductivity according to claim 1,
wherein, in the ionic conductivity reduction at step a), the ionic conductivity is reduced from 1 to 80% with respect to an ionic conductivity of 100% of the ionic conductivity of the sulfide-based solid-state electrolyte prior to atmospheric exposure.

5. The method for restoring ionic conductivity according to claim 1,
wherein the restoration of ionic conductivity in step a) increases the ionic conductivity of the sulfide-based solid-state electrolyte whose ionic conductivity is reduced by 1 to 300%.

6. The method for restoring ionic conductivity according to claim 1,
wherein the solvent having the dielectric constant of less than 7 is one or more selected from a group consisting of xylene, isobutyl butyrate, anisole, toluene, hexane, heptane, isobutyl isobutyrate (IBIB), decane, dibutyl ether, and butyl butyrate.

7. The method for restoring ionic conductivity according to claim 1,
wherein the contact between the sulfide-based solid-state electrolyte and the solvent is performed by mixing the solid-state electrolyte with the solvent, spraying the solvent onto the solid-state electrolyte, or immersing the solid-state electrolyte in the solvent.

8. The method for restoring ionic conductivity according to claim 1,
wherein the contact between the sulfide-based solid-state electrolyte and the solvent is performed so that a surface of the sulfide-based solid-state electrolyte is completely wetted with the solvent.

9. The method for restoring ionic conductivity according to claim 1,
wherein the drying is performed under a vacuum atmosphere.

10. The method for restoring ionic conductivity according to claim 1,
wherein the sulfide-based solid-state electrolyte comprises one or more selected from a group consisting of Li₁₀GeP₂S₁₂, Li₂S-P₂S₅ glasses, thio-LISICONS, Li_{9.54}Si_{1.74}P_{1.44}S_{11.7}Cl_{0.3}, Li₆PS₅X (LPSX; X = Cl, Br, I) argyrodites, and Li₁₂₋ₘ₋ₓ⁺(M^{m+}Y₄²⁻)Y₂₋ₓ²⁻Xₓ⁻ wherein M = Si, Ge, Sn, P, As; Y = O, S, Se, Te; X = Cl, Br, I; 0 ≤ x ≤ 2.

11. A sulfide-based solid-state electrolyte whose ionic conductivity is restored by the method according to claim 1.

12. A lithium ion secondary battery, comprising:
a positive electrode; a negative electrode; and a solid-state electrolyte interposed between the positive electrode and the negative electrode,
wherein the solid-state electrolyte comprises the sulfide-based solid-state electrolyte according to claim 11.
